# EUROPÄISCHE PATENTANMELDUNG

(11) **EP 1 847 419 A1**
(43) Veröffentlichungstag der Anmeldung: **24.10.2007**
(21) Anmeldenummer: 07106108.9
(22) Anmeldetag: 13.04.2007
(51) Int. Cl.: B60R 13/08, G10K 11/172

(54) **Schallisolierendes Bauteil für Kraftfahrzeuge und Verfahren zu dessen Herstellung**

(30) Priorität: 19.04.2006 DE 102006018465
(71) Anmelder: Carcoustics TechConsult GmbH, 51381 Leverkusen (DE)
(72) Erfinder: Blömeling, Heinz, 42799, Leichlingen (DE)
(74) Vertreter: Cohausz & Florack

(57) **Zusammenfassung**

Die Erfindung betrifft ein schallisolierendes Bauteil für Kraftfahrzeuge, mit einem schalldämmenden Formteil (2) und mindestens einer mit dem Formteil verbundenen schallabsorbierenden Schicht (4.1, 4.2, 4.3) aus luftdurchlässigem Material, sowie ein Verfahren zur Herstellung eines solchen Bauteils. Erfindungsgemäß wird in dem schalldämmenden Formteil (2) mindestens eine flache Vertiefung (3.1, 3.2, 3.3) ausgebildet, die durch die schallabsorbierende Schicht (4.1, 4.2, 4.3) verschlossen wird und mit dieser einen Hohlraum definiert, wobei die schallabsorbierende Schicht (4.1, 4.2, 4.3) bei einer Schichtdicke (S) von weniger als 10 mm einen längenbezogenen Strömungswiderstand von mindestens 18 kNs/m⁴ aufweist.

## Beschreibung

Die Erfindung betrifft ein schallisolierendes Bauteil für Kraftfahrzeuge, mit einem schalldämmenden Formteil und mindestens einer mit dem Formteil verbundenen schallabsorbierenden Schicht aus luftdurchlässigem Material, sowie ein Verfahren zur Herstellung eines solchen Bauteils.

Hinsichtlich der Minderung des Geräuschpegels im Fahrgastraum eines Kraftfahrzeuges ist es bekannt, an der den Fahrgastraum vom Motorraum trennenden Stirnwand eine schallisolierende Verkleidung anzubringen. Herkömmliche Stirnwandverkleidungen sind aus einer Schalldämmschicht und einer damit verbundenen schallabsorbierenden Schicht aufgebaut. Dabei werden häufig als Schallabsorber offenporige Weichschaumstoffe und als Schalldämmschicht sogenannte Schwerschichten aus Füllstoff enthaltenden Elastomeren verwendet.

Herkömmliche Stirnwandverkleidungen haben ein relativ hohes Gewicht, was im Hinblick auf ein geringes Gesamtgewicht des Fahrzeuges bzw. einen geringen Kraftstoffverbrauch nachteilig ist. Zudem haben herkömmliche Stirnwandverkleidungen meist einen hohen Platzbedarf, da deren offenporige Weichschaumschichten für eine zufriedenstellende Schallabsorption relativ voluminös ausgebildet werden müssen.

Der vorliegenden Erfindung liegt die Aufgabe zugrunde, ein schallisolierendes Bauteil der eingangs genannten Art zu schaffen, das relativ leicht und dünn ist, gleichwohl aber eine gute Schalldämmung sowie Schallabsorption bietet.

Gelöst wird diese Aufgabe durch ein schallisolierendes Bauteil mit den Merkmalen des Anspruchs 1.

Wie an sich bekannt, umfasst das erfindungsgemäße Bauteil ein schalldämmendes Formteil und mindestens eine schallabsorbierende Schicht aus luftdurchlässigem Material. Erfindungsgemäß ist in dem schalldämmenden Formteil mindestens eine flache Vertiefung ausgebildet, die durch die schallabsorbierende Schicht verschlossen ist und mit dieser einen Hohlraum definiert, wobei die schallabsorbierende Schicht bei einer Schichtdicke von weniger als 10 mm, insbesondere von weniger als 8 mm einen längenbezogenen Strömungswiderstand von mindestens 18 kNs/m⁴, vorzugsweise mindestens 25 kNs/m⁴, und besonders bevorzugt von mindestens 30 kNs/m⁴ aufweist.

Die schallabsorbierende, luftdurchlässige Schicht ist dabei vorzugsweise aus gesintertem Kunststoffgranulat und/oder aus verdichtetem Fasermaterial gebildet. Die schallabsorbierende Schicht besitzt somit eine relativ geringe Schichtdicke, die vorzugsweise weniger als 6 mm beträgt.

Besonders bevorzugt kommt als schallabsorbierende Schicht ein plattenförmiger oder dreidimensional geformter Schallabsorber aus gesintertem Polypropylen-Granulat zum Einsatz. Ein solcher luftdurchlässiger Schallabsorber verleiht dem erfindungsgemäßen Bauteil selbsttragende Eigenschaften bzw. verbessert die selbsttragende Eigenschaft des schalldämmenden Formteils. Er besitzt bei sehr geringem Gewicht eine hervorragende Formstabilität.

Das erfindungsgemäße Bauteil bietet bei geringem Gewicht und geringem Platzbedarf sowohl eine gute Schallabsorption (Schalldämpfung) als auch eine gute Schalldämmung.

Eine vorteilhafte Ausgestaltung des erfindungsgemäßen Bauteils ist dadurch gekennzeichnet, dass die schallabsorbierende Schicht Flächenbereiche mit unterschiedlichem Strömungswiderstand aufweist. Hierdurch kann die Breitbandigkeit der Schallabsorption, die üblicherweise frequenzabhängig ist, verbessert werden.

Hinsichtlich der Breitbandigkeit der Schallabsorption ist es auch vorteilhaft, wenn gemäß einer weiteren bevorzugten Ausgestaltung des erfindungsgemäßen Bauteils die von den Vertiefungen und den zugeordneten schallabsorbierenden Schichten definierten Hohlräume unterschiedliche Volumina besitzen.

Weitere bevorzugte und vorteilhafte Ausgestaltungen des erfindungsgemäßen Bauteils sind in den Unteransprüchen angegeben.

Darüber hinaus liegt der Erfindung die Aufgabe zugrunde, ein kostengünstiges Verfahren zur Herstellung des erfindungsgemäßen Bauteils anzugeben. Diese Aufgabe wird durch das in Anspruch 16 definierte Verfahren gelöst.

Das erfindungsgemäße Verfahren umfasst folgende Schritte: Formen des schalldämmenden Formteils aus einem aus thermoplastischem Kunststoff oder thermoplastischem Elastomer bestehenden Materialabschnitt mittels einer ein Formwerkzeug aufweisenden Tiefziehmaschine; Erzeugen mindestens einer flachen Vertiefung in dem Formteil während des Tiefziehens; Abdecken der flachen Vertiefung mit einem Zuschnitt der schallabsorbierenden, luftdurchlässigen Schicht, so dass das schalldämmende Formteil und die schallabsorbierende, luftdurchlässige Schicht einen luftgefüllten Hohlraum definieren; und Erzeugen eines umlaufenden oder im wesentlichen umlaufenden Hinterschnitts in der Vertiefung, so dass die schallabsorbierende, luftdurchlässige Schicht formschlüssig in dem Hinterschnitt gehalten ist.

Der Hinterschnitt in der Vertiefung des schalldämmenden Formteils kann gemäß einer Variante des erfindungsgemäßen Verfahrens auch vor der Anordnung eines Zuschnitts der luftdurchlässigen Schicht erzeugt werden. In diesem Fall wird die schallabsorbierende, luftdurchlässige Schicht als zuschnitt in den Hinterschnitt mittels einer der Tiefziehmaschine zugeordneten, relativ zum Formwerkzeug verfahrbaren Aufnehmervorrichtung eingesetzt.

Nachfolgend wird die Erfindung anhand einer mehrere Ausführungsbeispiele darstellenden Zeichnung näher erläutert. Es zeigen schematisch:
- Fig. 1: eine Seitenansicht eines erfindungsgemäßen Bauteils;
- Fig. 2: ein schallisolierendes Bauteil gemäß Fig. 1, angeordnet an einem Karosserieblech, in Schnittansicht;
- Fig. 3: einen Abschnitt eines erfindungsgemäßen Bauteils in Schnittansicht;
- Fig. 4: ein Formwerkzeug zur Herstellung eines erfindungsgemäßen Bauteils, in Schnittansicht;
- Fig. 5: eine Seitenansicht einer eine Tiefziehmaschine aufweisenden Anlage zur Herstellung erfindungsgemäßer Bauteile; und
- Fig. 6: die Tiefziehmaschine gemäß Fig. 5 in einer anderen Seitenansicht.

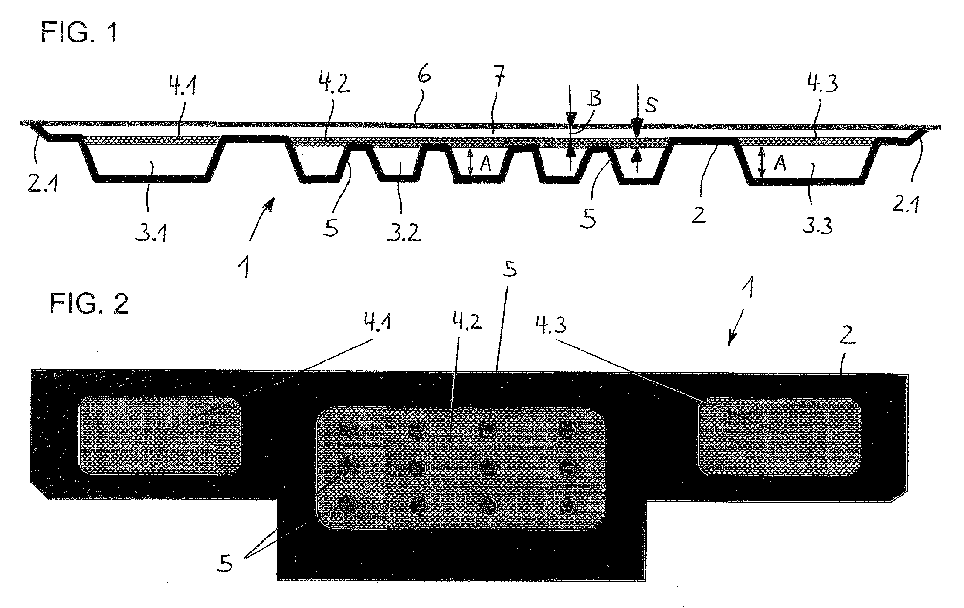

In den Figuren 1 und 2 ist ein akustisch wirksames Bauteil 1 in Form einer Stirnwandverkleidung dargestellt. Das Bauteil 1 weist ein aus einer Schwerschicht oder einem Thermoplasten gebildetes Formteil 2 auf, das schalldämmende Eigenschaften besitzt. Die Schwerschicht kann dabei insbesondere aus EPDM oder thermoplastischem Elastomer gebildet sein. Das Formteil 2 ist im wesentlichen luftundurchlässig.

In dem schalldämmenden Formteil 2 sind mehrere Vertiefungen 3.1, 3.2, 3.3 eingeformt. Die Vertiefungen 3.1, 3.2, 3.3 sind relativ flach ausgebildet und durch schallabsorbierende, luftdurchlässige Schichten 4.1, 4.2, 4.3 verschlossen, so dass die jeweilige Vertiefung mit der schallabsorbierenden Schicht einen relativ dünnen, luftgefüllten Hohlraum definiert. Der Abstand A zwischen dem Boden der Vertiefung 3.1, 3.2 oder 3.3 und der Unterseite der schallabsorbierenden Schicht 4.1, 4.2 bzw. 4.3 liegt im Bereich von 2 bis 20 mm, insbesondere im Bereich von 2 bis 10 mm. Das schalldämmende, luftundurchlässige Formteil 2 weist im Bereich der jeweiligen Vertiefung 3.1, 3.2, 3.3 keine Öffnung auf. Der durch die jeweilige Vertiefung 3.1, 3.2 oder 3.3 und die schallabsorbierende Schicht 4.1, 4.2 bzw. 4.3 definierte Hohlraum ist insoweit ein geschlossener Hohlraum. Das Volumen des jeweiligen Hohlraums liegt beispielsweise im Bereich von 500 bis 6.000 cm³, vorzugsweise im Bereich von 1.000 bis 6.000 cm³.

Bei den schallabsorbierenden Schichten 4.1, 4.2, 4.3 handelt es sich um strömungsoptimierte Schallabsorber, die beispielsweise aus gesintertem Polypropylengranulat und/oder aus verdichtetem Fasermaterialien gebildet sind. Die Fasermaterialien können dabei ebenfalls gesintert sein. Die schallabsorbierenden Schichten 4.1, 4.2, 4.3 sind relativ dünn. Ihre Schichtdicke beträgt weniger als 10 mm. Die Dicke der Schichten 4.1, 4.2, 4.3 liegt beispielsweise im Bereich von 1 bis 8 mm, vorzugsweise im Bereich von 1 bis 6 mm. Sie besitzen bei einer Schichtdicke von weniger als 10 mm, insbesondere weniger als 6 mm, einen längenbezogenen Strömungswiderstand von mindestens 18 kNs/m⁴, vorzugsweise von mindestens 25 kNs/m⁴.

In dem in den Figuren 1 und 2 dargestellten Ausführungsbeispiel sind die Vertiefungen 3.1, 3.2, 3.3 und dementsprechend die schallabsorbierenden Schichten 4.1, 4.2, 4.3 mit unterschiedlich großen Flächenmaßen ausgeführt. Somit besitzen die von den Vertiefungen 3.1, 3.2, 3.3 und den zugeordneten schallabsorbierenden Schichten 4.1, 4.2, 4.3 definierten Hohlräume unterschiedlich große Volumina. Ferner sind die schallabsorbierenden Schichten 4.1, 4.2, 4.3 mit unterschiedlicher Schichtdicke bzw. unterschiedlichem Strömungswiderstand ausgeführt. Es ist zu erkennen, dass die Schicht 4.2 dicker ist als die Schichten 4.1 und 4.3. Die Dicke S der Schicht 4.2 beträgt beispielsweise ca. 5 mm, während die Schichten 4.1 und 4.3 eine Dicke von ca. 3 mm aufweisen.

Die Erfindung schlägt insbesondere vor, mindestens eine der schallabsorbierenden Schichten 4.1, 4.2, 4.3 so auszuführen, dass die betreffende Schicht definierte Flächenbereiche mit Örtlich unterschiedlichem Strömungswiderstand aufweist.

Wie in den Figuren 1 und 2 gezeigt, ist die eine relativ große Flächenerstreckung aufweisende Vertiefung 3.2 des schalldämmenden Formteils 2 mit Abstandhaltern 5 versehen. Die Abstandhalter 5 sind als Erhebungen gegenüber der Vertiefung 3.2 ausgeprägt. Die Abstandhalter 5 stellen bei entsprechend großflächigen Schallabsorberschichten 4.2 einen definierten Wandabstand A zwischen dem Boden der Vertiefung 3.2 und der zugeordneten Schallabsorberschicht 4.2 sicher. Es ist zu erkennen, dass die schallabsorbierende Schicht 4.2 an den Abstandhaltern 5 anliegt. Sie ist an den rasterförmig angeordneten Abstandhaltern 5 abgestützt.

Der Abstand A zwischen dem Boden der jeweiligen Vertiefung 3.1, 3.2 oder 3.3 und der zugeordneten Schallabsorberschicht 4.1, 4.2, 4.3 liegt vorzugsweise in einem Bereich von 5 bis 60 mm, insbesondere in einem Bereich von 5 bis 30 mm.

Ferner ist in Fig. 2 zu erkennen, dass das schalldämmende Formteil 2 eine umlaufende Dichtlippe 2.1 aufweist. Die elastische Dichtlippe 2.1 ist vorzugsweise einstückig mit dem Formteil 2 ausgebildet. Sie steht gegenüber den schallabsorbierenden Schichten 4.1, 4.2, 4.3 in Richtung des Karosserieblechs 6 vor. Das Formteil 2 ist hierdurch zu dem Karosserieblech 6 abgedichtet, wobei die Dichtlippe 2.1 zugleich einen Wandabstand B zwischen den schallabsorbierenden Schichten 4.1, 4.2, 4.3 und dem Karosserieblech 6 sicherstellt. Die Dichtlippe 2.1 wirkt folglich auch als Abstandhalter und definiert einen dünnen Hohlraum zwischen dem schallisolierenden Bauteil 1 und dem zugeordneten Karosserieteil 6. Der Wandabstand B liegt beispielsweise im Bereich von 5 bis 20 mm, vorzugsweise im Bereich von 5 bis 10 mm. Die schallabsorbierenden Schichten 4.1, 4.2, 4.3 sind dem Karosserieteil (Blech) 6 zugewandt. Sie sind also zwischen Karosserieteil 6 und Formteil 2 angeordnet.

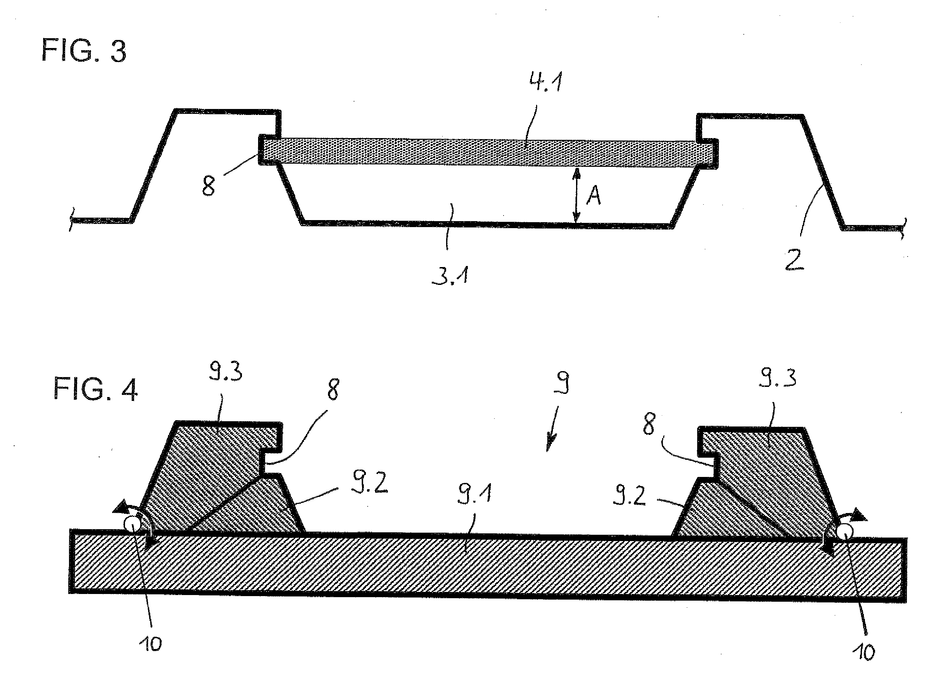

Die schallabsorbierenden Schichten 4.1, 4.2, 4.3 sind mit dem schalldämmenden Formteil 2 durch Formschluss verbunden. Hierzu ist in der jeweiligen Vertiefung 3.1, 3.2, 3.3 des Formteils 2 ein Hinterschnitt 8 ausgebildet, in welchem die schallabsorbierende Schicht 4.1, 4.2 bzw. 4.3 randseitig gehalten bzw. eingeklemmt ist (vgl. Fig. 3).

In Fig. 4 ist ein Formwerkzeug 9 zur Herstellung eines erfindungsgemäßen Bauteils 1 skizziert. Das Formwerkzeug 9 weist eine Grundplatte 9.1 auf, die auf ihrer oberen Seite mit im Querschnitt betrachtet trapezförmigen Erhebungen 9.2 versehen ist. Den Erhebungen 9.2 sind drehbar gelagerte Ergänzungsstücke 9.3 zugeordnet, die mit den Erhebungen 9.2 einen nutförmigen Hinterschnitt 8 bilden. Die Drehachsen der Ergänzungsstücke 9.3 sind mit 10 bezeichnet.

Das Formwerkzeug 9 ist Teil einer mittels Vakuum arbeitenden Tiefziehmaschine. Die Grundplatte 9.1 des Formwerkzeuges 9 ist hierzu mit einer Vielzahl kleiner Ansaugkanäle (nicht gezeigt) versehen, die an einem Sauggebläse (nicht gezeigt) angeschlossen sind.

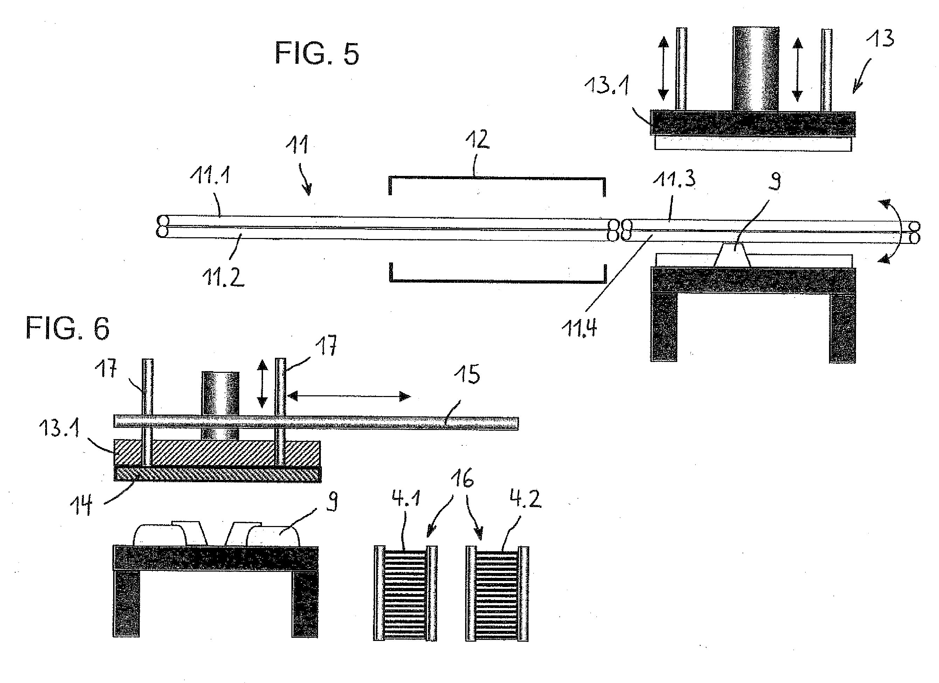

Die Herstellung akustisch wirksamer Bauteile 1 gemäß der Erfindung wird nun mit Bezug auf die Figuren 5 und 6 weiter erläutert. Die in den Figuren 5 und 6 schematisch dargestellte Anlage umfasst eine Fördervorrichtung 11, die beispielsweise aus Endloskettenförderern gebildet ist. Zwischen gegenläufigen Endloskettenpaaren 11.1, 11.2 wird ein thermoplastischer Zuschnitt (in Fig. 5 nicht gezeigt), zum Beispiel als Schwerschicht, randseitig eingespannt und in eine tunnelartige Heizstation 12 transportiert. In der Heizstation 12 wird der thermoplastische Zuschnitt auf eine für ein Umformen günstige Erweichungstemperatur erwärmt. Hinter der Heizstation 12 sind weitere Endloskettenpaare 11.3, 11.4 angeordnet, die den zuschnitt von den vorgeschalteten Endloskettenpaaren 11.1, 11.2 übernehmen und zu einer Tiefziehmaschine 13 transportieren. Die Tiefziehmaschine 13 ist mit einem ausfahrbaren bzw. heb- und senkbaren Oberstempel 13.1 sowie mindestens einem Formwerkzeug 9 entsprechend Fig. 4 ausgerüstet. Das Formwerkzeug 9 kann dabei beispielsweise zwei, drei oder mehr Kavitäten aufweisen, die der Erzeugung einer entsprechenden Anzahl von getrennten Vertiefungen 3.1, 3.2, 3.2 in dem erwärmten thermoplastischen Zuschnitt dienen. Darüber hinaus wird mittels des Formwerkzeugs 9 die oben erwähnte Dichtlippe 2.1 in den thermoplastischen Zuschnitt eingeformt. Zum Entformen des Bauteils 1 können die Endloskettenpaare 11.3, 11.4 auseinander bewegt werden.

Der Oberstempel 13.1 ist mit einer relativ zum Formwerkzeug 9 verfahrbaren Aufnehmervorrichtung 14 (Aufnehmerplatte) versehen und kann entlang einer Führungsvorrichtung 15 horizontal vom Formwerkzeug 9 zu Magazinen 16 mit vorgestanzten oder zugeschnitten Schallabsorbern und zurück verfahren werden. Bei den Schallabsorbern handelt es sich um die oben erwähnten schallabsorbierenden Schichten 4.1, 4.2, 4.3 gemäß den Figuren 1 und 2. Die Aufnehmervorrichtung 14 ist mit pneumatischen Hubzylindern 17 und Saugnäpfen zur Aufnahme der Schallabsorber 4.1, 4.2, 4.3 ausgestattet.

Die aus den Magazinen 16 aufgenommenen Schallabsorber 4.1, 4.2, 4.3 werden über die in dem thermoplastischen Zuschnitt, d.h. dem schalldämmenden Formteil 2 ausgebildeten Vertiefungen 3.1, 3.2, 3.3 bewegt, so dass das schalldämmende Formteil 2 und der jeweilige Schallabsorber 4.1, 4.2, 4.3 einen luftgefüllten Hohlraum definieren. In der jeweiligen Vertiefung 3.1, 3.2, 3.3 des schalldämmenden Formteils 2 wird dann ein umlaufender oder im wesentlichen umlaufender Hinterschnitt 8 erzeugt, so dass die schallabsorbierende, luftdurchlässige Schicht 4.1, 4.2 bzw. 4.3 formschlüssig in dem Hinterschnitt 8 gehalten bzw. eingeklemmt ist (vgl. Figuren 3 und 4).

Die Ausführung der vorliegenden Erfindung ist nicht auf die vorstehend beschriebenen Ausführungsbeispiele beschränkt. Vielmehr sind eine Reihe von Varianten möglich, die auch bei abweichender Gestaltung von dem in den Ansprüchen enthaltenen Erfindungsgedanken Gebrauch machen. So kann das schalldämmende Formteil 2 des erfindungsgemäßen Bauteils beispielsweise auch mehr als zwei oder drei Vertiefungen 3.1, 3.2, 3.3 mit einer entsprechenden Anzahl von darin aufgeprägten, formschlüssig gehaltenen Schallabsorbern 4.1, 4.2, 4.3 aufweisen.

## Patentansprüche

1. Schallisolierendes Bauteil (1) für Kraftfahrzeuge, mit einem schalldämmenden Formteil (2) und mindestens einer mit dem Formteil verbundenen schallabsorbierenden Schicht (4.1, 4.2, 4.3) aus luftdurchlässigem Material,
**dadurch gekennzeichnet, dass**
in dem schalldämmenden Formteil (2) mindestens eine flache Vertiefung (3.1, 3.2, 3.3) ausgebildet ist, die durch die schallabsorbierende Schicht (4.1, 4.2, 4.3) verschlossen ist und mit dieser einen Hohlraum definiert, wobei die schallabsorbierende Schicht (4.1, 4.2, 4.3) bei einer Schichtdicke (S) von weniger als 10 mm einen längenbezogenen Strömungswiderstand von mindestens 18 kNs/m⁴ aufweist.

2. Schallisolierendes Bauteil nach Anspruch 1,
**dadurch gekennzeichnet, dass**
die schallabsorbierende Schicht (4.1, 4.2, 4.3) einen längenbezogenen Strömungswiderstand von mindestens 25 kNs/m⁴, vorzugsweise von mindestens 30 kNs/m⁴ aufweist.

3. Schallisolierendes Bauteil nach Anspruch 1 oder 2,
**dadurch gekennzeichnet, dass**
die schallabsorbierende Schicht (4.1, 4.2, 4.3) randseitig in einem Hinterschnitt (8) des schalldämmenden Formteils (2) formschlüssig gehalten ist.

4. Schallisolierendes Bauteil nach einem der Ansprüche 1 bis 3,
**dadurch gekennzeichnet, dass**
das schalldämmende Formteil (2) aus thermoplastischem Kunststoff, Ethylen-Propylen-Dien-Kautschuk oder thermoplastischem Elastomer gebildet ist.

5. Schallisolierendes Bauteil nach einem der Ansprüche 1 bis 4,
**dadurch gekennzeichnet, dass**
die schallabsorbierende, luftdurchlässige Schicht (4.1, 4.2, 4.3) aus gesintertem Kunststoffgranulat und/oder aus verdichtetem Fasermaterial gebildet ist.

6. Schallisolierendes Bauteil nach einem der Ansprüche 1 bis 5,
**dadurch gekennzeichnet, dass**
die Schichtdicke (S) der schallabsorbierenden Schicht (4.1, 4.2, 4.3) weniger als 6 mm beträgt.

7. Schallisolierendes Bauteil nach einem der Ansprüche 1 bis 6,
**dadurch gekennzeichnet, dass**
die mindestens eine Vertiefung (3.1, 3.2, 3.3) des schalldämmenden Formteils (2) mit Abstandhaltern (5) versehen ist, an denen die schallabsorbierende Schicht (4.1, 4.2, 4.3) anliegt.

8. Schallisolierendes Bauteil nach einem der Ansprüche 1 bis 7,
**dadurch gekennzeichnet, dass**
die schallabsorbierende Schicht (4.1, 4.2, 4.3) Flächenbereiche mit unterschiedlichem Strömungswiderstand aufweist.

9. Schallisolierendes Bauteil nach einem der Ansprüche 1 bis 8,
**dadurch gekennzeichnet, dass**
in dem schalldämmenden Formteil (2) mehrere flache Vertiefungen (3.1, 3.2, 3.3) ausgebildet sind, die jeweils durch eine schallabsorbierende, luftdurchlässige Schicht (4.1, 4.2, 4.3) verschlossen sind und mit dieser jeweils einen Hohlraum definieren.

10. Schallisolierendes Bauteil nach Anspruch 9,
**dadurch gekennzeichnet, dass**
die Vertiefungen (3.1, 3.2, 3.3) und die diesen zugeordneten schallabsorbierenden, luftdurchlässigen Schichten (4.1, 4.2, 4.3) mit unterschiedlich großen Flächenmaßen ausgeführt sind.

11. Schallisolierendes Bauteil nach Anspruch 9 oder 10,
**dadurch gekennzeichnet, dass**
die schallabsorbierenden, luftdurchlässigen Schichten (4.1, 4.2, 4.3) mit unterschiedlichem Strömungswiderstand und/oder unterschiedlicher Schichtdicke (S) ausgeführt sind.

12. Schallisolierendes Bauteil nach einem der Ansprüche 9 bis 11,
**dadurch gekennzeichnet, dass** die von den Vertiefungen (3.1, 3.2, 3.3) und den zugeordneten schallabsorbierenden, luftdurchlässigen Schichten (4.1, 4.2, 4.3) definierten Hohlräume unterschiedliche Volumina besitzen.

13. Schallisolierendes Bauteil nach einem der Ansprüche 1 bis 12,
**dadurch gekennzeichnet, dass**
das schalldämmende Formteil (2) eine umlaufende Dichtlippe (2.1) aufweist.

14. Schallisolierendes Bauteil nach Anspruch 13,
**dadurch gekennzeichnet, dass**
die Dichtlippe (2.1) auch als Abstandhalter wirkt, so dass das schallisolierende Bauteil (2) mit einem zugeordneten Karosserieteil (6) einen Hohlraum (7) definiert.

15. Schallisolierendes Bauteil nach einem der Ansprüche 1 bis 14,
**dadurch gekennzeichnet, dass**
es als Stirnwandverkleidung ausgebildet ist.

16. Verfahren zur Herstellung eines schallisolierenden Bauteils (1) nach einem der Ansprüche 1 bis 15,
bei dem das schalldämmende Formteil (2) aus einem aus thermoplastischem Kunststoff oder thermoplastischem Elastomer bestehenden Materialabschnitt mittels einer ein Formwerkzeug (9) aufweisenden Tiefziehmaschine (13) gebildet wird,
bei dem die mindestens eine flache Vertiefung während des Tiefziehens erzeugt wird,
bei dem die flache Vertiefung (3.1, 3.2, 3.3) mit einem Zuschnitt der schallabsorbierenden, luftdurchlässigen Schicht (4.1, 4.2, 4.3) abgedeckt wird, so dass das schalldämmende Formteil (2) und die schallabsorbierende, luftdurchlässige Schicht (4.1, 4.2, 4.3) einen luftgefüllten Hohlraum definieren; und bei dem in der Vertiefung (3.1, 3.2, 3.3) ein umlaufender oder im wesentlichen umlaufender Hinterschnitt (8) erzeugt wird, so dass die schallabsorbierende, luftdurchlässige Schicht (4.1, 4.2, 4.3) formschlüssig in dem Hinterschnitt (8) gehalten ist.
